# EUROPEAN PATENT SPECIFICATION

(11) **EP 4 386 434 B1**
(45) Date of publication and mention of the grant of the patent: **18.11.2026**
(21) Application number: 23215156.3
(22) Date of filing: 08.12.2023
(51) Int. Cl.: G01S 17/931, G01S 17/42, G01S 7/481, G01S 7/4865

(54) **LIDAR CONTROLLING METHOD AND APPARATUS, TERMINAL DEVICE**
LIDAR-STEUERUNGSVERFAHREN UND -VORRICHTUNG, ENDGERÄTEVORRICHTUNG
PROCÉDÉ ET APPAREIL DE COMMANDE LIDAR, DISPOSITIF TERMINAL

(30) Priority: 15.12.2022 CN 202211615592
(43) Date of publication of application: 19.06.2024
(73) Proprietor: Suteng Innovation Technology Co., Ltd, Shenzhen City Guangdong 518000 (CN)
(72) Inventor: CHEN, Huazhou, Shenzhen City (CN)
(74) Representative: Ran, Handong

(56) References cited:
- US-A1- 2019 383 911
- US-A1- 2020 077 588
- US-A1- 2022 187 471

## Description

### TECHNICAL FIELD

This application pertains to the technical field of LiDARs, and particularly relates to a LiDAR controlling method, a terminal device, and a computer-readable storage medium.

### BACKGROUND

LiDAR is usually used in fields such as automated driving, transport vehicles, robots, and public smart transportation by virtue of their advantages such as high resolution, high sensitivity, and adaptability under dark conditions.

However, when being used for detection, the LiDAR often receives interference from channels, external different LiDAR, and ambient noise. This reduces detection accuracy of the LiDAR. However, if the existing solutions are used to solve the crosstalk problem, a problem of low detection ability for small targets is caused.
US 2022/187471 A1 discloses a LIDAR system having a laser emission unit configured to generate a plurality of laser beams. The system has a scanning unit configured to receive the plurality of laser beams. The common scanning unit projects the plurality of laser beams toward a field of view of the LIDAR system. The scanning unit scans the field of view of the LIDAR system by directing the plurality of beams along a first plurality of scan lines traversing the FOV. The plurality of laser beams are displaced from a first set of locations associated with the first plurality of scan lines to a second set of locations associated with a second plurality of scan lines. Further, the plurality of laser beams are directed along the second plurality of scan lines.
US 2020/077588 A1 discloses a system for scanning crops. A line scan distance sensor measures a distance of the crops from the sensor and generates distance data indicative of the distance of the crops from the sensor at a measurement angle. A mover system moves the line scan distance sensor or the crops perpendicular to the distance of the crops from the sensor. A rotary encoder associated with the mover system generates movement data indicative of a movement of the distance sensor or the crops perpendicular to the distance of the crops from the sensor. A data collector associates the distance data from the distance sensor with relative positioning data based on the movement data from the rotary encoder and stores the distance data associated with the relative positioning data on a data store.
US 2019/383911 A1 discloses a LiDAR system, comprising: a beam steering system comprising a polygon structure and a mirror coupled to a mirror controller that controls movement speed and direction of the mirror; a laser system operative to emit light pulses that are steered by the beam steering system in accordance with a field of view (FOV); and a region of interest (ROI) controller coupled to the beam steering system and the laser system. The ROI controller is operative to coordinate the movement speed of the mirror and light pulse intervals when the light pulses emitted by the laser system are steered to at least one ROI within the FOV.

### SUMMARY

Embodiments of this application provide a LiDAR controlling method and apparatus, a terminal device, and a computer-readable storage medium, which can ensure detection of a small target and improve the detection accuracy of the LiDAR while solving the crosstalk problem of the LiDAR. The invention is set out in the appended set of claims.

According to a first aspect, an embodiment of this application provides a LiDAR controlling method, including:
controlling a LiDAR to move by a preset stepping in a scanning direction after the LiDAR completes a task of emitting a detection laser beam via a current emission channel, and emitting a detection laser beam via a next emission channel, where the preset stepping is less than a divergence angle of a scanning light spot of the current emission channel, and the current emission channel emits the detection laser beam according to a jitter delay corresponding to the current emission channel; and
filtering echo data received by a current receiving channel according to echo data received by adjacent receiving channels to obtain a scanning result of the current receiving channel.

In one implementation of the first aspect, before filtering echo data received by a current receiving channel according to echo data received by adjacent receiving channels to obtain the scanning result of the current receiving channel, the method includes:
obtaining the echo data received by adjacent receiving channels and the echo data received by the current receiving channel according to the jitter delay.

In one implementation of the first aspect, filtering the echo data received by the current receiving channel according to the echo data received by the adjacent receiving channels to obtain the scanning result of the current receiving channel includes: identifying whether the target point is a noise point according to the echo data received by the adjacent receiving channels when the echo data received by the current receiving channel includes a target point; and when the target point is the noise point, deleting the echo data corresponding to the target point.

In one implementation of the first aspect, identifying whether the target point is the noise point according the echo data received by the adjacent receiving channels when the echo data received by the current receiving channel includes the target point;
determining whether the echo data received by the adjacent receiving channels includes an effective point corresponding to the target point; and
when the echo data received by the adjacent receiving channels includes the effective point corresponding to the target point, determining that the target point is the effective point; otherwise, determining that the target point is the noise point.

In one implementation of the first aspect, the step of determining whether the echo data received by the adjacent receiving channels includes an effective point corresponding to the target point includes:
obtaining position information of the target point; and
determining whether the echo data received by the adjacent receiving channels includes the effective point corresponding to the target point according to the position information of the target point.

In one implementation of the first aspect, determining whether the echo data received by the adjacent receiving channels includes the effective point corresponding to the target point includes:
obtaining detection time of the target point; and
determining whether the echo data received by the adjacent receiving channels includes the effective point corresponding to the target point according to the detection time of the target point.

In one implementation of the first aspect, the degree of correlation between jitter delays of respective emission channels is less than a preset threshold.

In one implementation of the first aspect, the echo data received by the current receiving channel is the echo data received by the current receiving channel within a preset time; or the echo data received by the current receiving channel is the echo data received by the current receiving channel after a preset region is scanned.

According to a second aspect, an embodiment of this application provides a LiDAR controlling apparatus, including: a control module, configured to control a LiDAR to move by a preset stepping in a scanning direction after the LiDAR completes the task of emitting a detection laser beam via a current emission channel, and control the next emission channel to emit a detection laser beam until tasks of emitting detection laser beams are completed via all emission channels, where the preset stepping is less than a divergence angle of a scanning light spot of the current emission channel, and emit the detection laser beam is emitted by the current emission channel according to a jitter delay corresponding to the current emission channel; and
a filtering module, configured to filter echo data received by a current receiving channel according to echo data received by adjacent receiving channels to obtain a scanning result of the current receiving channel.

According to a third aspect, an embodiment of this application provides a terminal device, including a processor, a memory, and a computer program stored in the memory and executable on the processor. When the processor executes the computer program, the LiDAR controlling method according to the first aspect or any one of the optional embodiments of the first aspect is implemented.

According to a fourth aspect, an embodiment of this application provides a computer-readable storage medium, having a computer program stored therein. When the computer program is executed by the processor, the LiDAR controlling method according to the first aspect or any one of the optional embodiments of the first aspect is implemented.

According to a fifth aspect, an embodiment of this application provides a computer program product. When the computer program product is executed on a terminal device, the terminal device performs the LiDAR controlling method according to the first aspect or any optional embodiment of the first aspect.

Compared with the prior art, the embodiments of this application have the following beneficial effects:
The LiDAR controlling method, the terminal device, the computer-readable storage medium, and the computer program product provided in the embodiments of this application have the following beneficial effects:
For the LiDAR controlling method provided in the embodiments of this application, the stepping for the movement of the LiDAR is set to be less than a divergence angle of the scanning light spot of the current emission channel, so that the scanning light spots between the adjacent emission channels are overlapped, thereby enhancing the correlation between the adjacent emission channels. Therefore, the echo data received by the adjacent emission channel is utilized to filter the echo data received by a target emission channel, which reduces the problem of mistakenly identifying an effective point as noise, improves the ability of the LiDAR to detect a small target object, and increases the detection accuracy of the LiDAR.

### BRIEF DESCRIPTION OF THE DRAWINGS

To explain the technical solution in embodiments in this application, the following briefly introduces the accompanying drawings required to describe the embodiments or the prior art. Obviously, the accompanying drawings in the following description are only some embodiments in this application. A person skilled in the art may still derive other drawings from these accompanying drawings without creative efforts.
Fig. 1 is a schematic flowchart of implementation of a LiDAR controlling method according to an embodiment of this application;
Fig. 2 is a schematic diagram of a scanning scenario of a LiDAR controlling method according to an embodiment of this application;
Fig. 3 is a schematic diagram of overlapping of scanning light spots of various emission channels according to an embodiment of this application;
Fig. 4 is a schematic diagram of overlapping of scanning light spots corresponding to different detection views according to an embodiment of this application;
Fig. 5 is a schematic diagram of overlapping of scanning light spots corresponding to different detection views according to an embodiment of this application;
Fig. 6 is a schematic diagram of a signal emission process of a LiDAR controlling method according to an embodiment of this application;
Fig. 7 is a schematic structural diagram of a LiDAR controlling apparatus according to an embodiment of this application; and
Fig. 8 is a schematic structural diagram of a terminal device according to an embodiment of this application.

### DESCRIPTION OF THE EMBODIMENTS

For the purpose of illustration rather than limitation, the following describes specific details such as a specific system structure and technology, to facilitate a thorough understanding of the embodiments of this application. However, a person skilled in the art should understand that this application may also be implemented in other embodiments without these details. In other cases, detailed descriptions of well-known systems, apparatuses, circuits, and methods are omitted, to prevent unnecessary details from causing distraction from the description of this application.

It should be further understood that the term "and/or" used in this specification and appended claims of this application refers to any combination of one or more of the associated items listed and all possible combinations thereof, and inclusion of these combinations. In addition, in the descriptions of this specification and the appended claims of this application, the terms "first", "second", "third" and the like are merely intended for differential description, and should not be understood as any indication or implication of relative importance.

It should be further understood that reference to "an embodiment", "some embodiments", or the like described in this specification of this application means that one or more embodiments of this application include a specific feature, structure, or characteristic described with reference to the embodiments. Therefore, expressions such as "in an embodiment", "in some embodiments", "in some other embodiments", and "in some additional embodiments" appearing in different places in this specification do not necessarily indicate reference to the same embodiment, but mean "one or more but not all embodiments", unless otherwise specified in another way. The terms "include", "comprise", "have", and variants thereof all mean "including but not limited to", unless otherwise specified in another way.

For LiDAR according to a direct time-of-flight principle, multi-emission coding or the coding manner of a single-emission jitter is usually utilized to reduce interference from channels, external different LiDARs, and ambient noise. The multi-emission coding is an emission manner in which each channel emits a plurality of pulse signals, controls the emission intervals of the plurality of emitted pulse signals, utilizes the reception results of the plurality of pulse signals to perform analysis to reduce the interference between the different channels.

However, a multi-emission coding manner has power consumption multiplied by a response multiplier. In addition, the corresponding circuits have to be supported by a corresponding loop, which increases the hardware cost and the complexity of a hardware circuit. The coding manner of a single-emission jitter is an emission manner in which one jitter time is added when each channel is emitted. With the manner, the interference between received signals is reduced. However, this manner deletes an effective point (a small target object) that exists in isolation as noise when the received data are processed, thus greatly reducing the ability of the LiDAR to detect a small target.

Therefore, an embodiment of this application provides a LiDAR controlling method. Scanning light spots of adjacent channels of LiDAR are controlled to be overlapped, thereby improving the correlation of the adjacent channels. An isolated detection point detected by a current channel is filtered using the adjacent channels, which may effectively detect a small target object, thereby effectively improving the ability of the LiDAR to detect a small target object.

It should be noted that the small target object referred to in an embodiment of this application is a target object in which a scattering cross-sectional area of the LiDAR is less than a preset value and which is easily overwhelmed by ground clutter and noise. The forgoing preset value may be set according to the application scenario, for example, for LiDAR applied to a vessel. The forgoing scattering cross-sectional area of the LiDAR is set to 0.1 m². This application does not make any specific limitation thereto.

The LiDAR controlling method provided in an embodiment of this application is described in detail below.

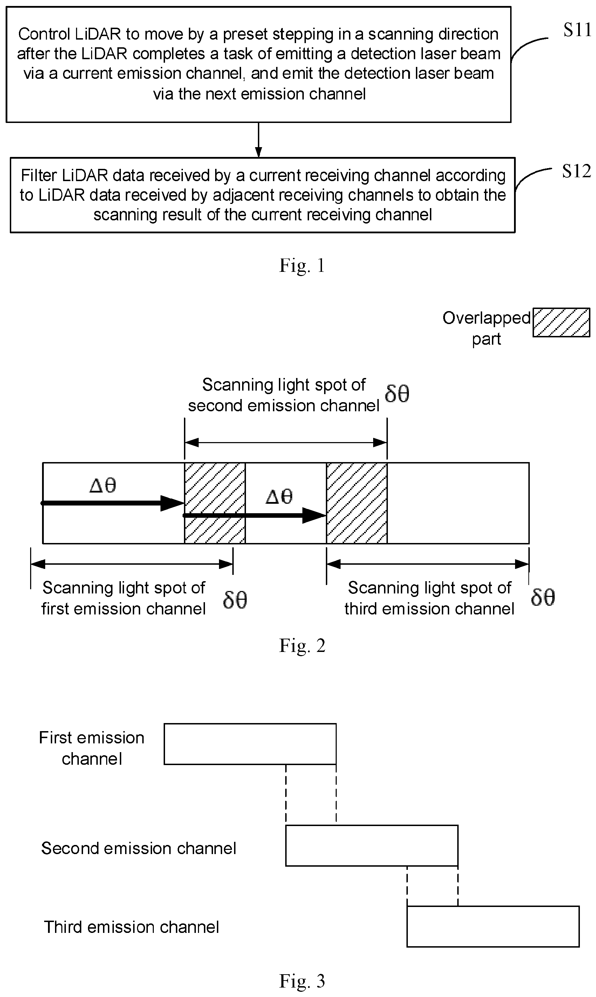

Referring to Fig. 1, Fig. 1 is a schematic flowchart of a data processing method according to an embodiment of this application. An execution body of the LiDAR controlling method provided in an embodiment of this application may be the LiDAR, a control system/ a control module inside the LiDAR, or a terminal device that is communicatively connected to the LiDAR. The terminal device may be a mobile terminal such as a smartphone, a tablet computer, or a wearable device, or may be a device such as a computer, a cloud server, or a LiDAR-assisted computer in various application scenarios. An example using the LiDAR as the execution body is used for description below.

As shown in Fig. 1, the LiDAR controlling method provided in an embodiment of this application may include step S11 to step S12. Details are as follows:
S11. Control the LiDAR to move by a preset stepping in a scanning direction after the LiDAR completes the task of emitting a detection laser beam via a current emission channel, and emit a detection laser beam via the next emission channel.

The preset stepping is less than a divergence angle of a scanning light spot of the current emission channel.

The current emission channel emits the detection laser beam according to a jitter delay corresponding to the current emission channel.

In a specific application, the forgoing preset stepping may be set according to actual application requirement. This application does not make any specific limitation thereto.

A divergence angle of the scanning light spot refers to an angle of a light emitting point corresponding to a diameter of the scanning light spot in a preset direction within a preset detection distance. The preset detection distance may be set according to the detection requirement of the LiDAR.

In a specific application, in the same emission cycle, each emission channel only emits the detection laser beam for one time, which may reduce the overall power consumption of the LiDAR. The preset stepping is set to be less than the divergence angle of the scanning light spot of the current emission channel, so that the scanning light spots between the adjacent emission channels are overlapped. The light spots between the adjacent emission channels are overlapped, which may effectively improve the correlation of the adjacent emission channels. Therefore, the echo data received by the current receiving channel is filtered using the echo data received by the adjacent receiving channels, which reduces the problems of mistakenly identifying an effective point as noise, and improves the ability of the LiDAR to detect a small-volume/small-area target object. In addition, an emission jitter delay is set between the adjacent emission channels for the same emission, which avoids interference between the adjacent emission channels.

In an optional embodiment of this application, the divergence angles of the scanning light spots of the forgoing respective emission channels is equal. That is, the scanning light spots of the respective emission channels may scan the same range.

In another optional embodiment of this application, the divergence angles of the scanning light spots of the forgoing respective emission channels are not necessarily equal. The divergence angles of the scanning light spots of the emission channels at different positions are different.

It can be understood that the forgoing preset stepping may be set according to the divergence angle of the scanning light spot of the emission channel. When the divergence angles of the scanning light spots of the emission channels at different positions are different, the preset steppings for movement are also not equal after the different emission channels complete emission when the same degree of overlapping of the light spots is maintained.

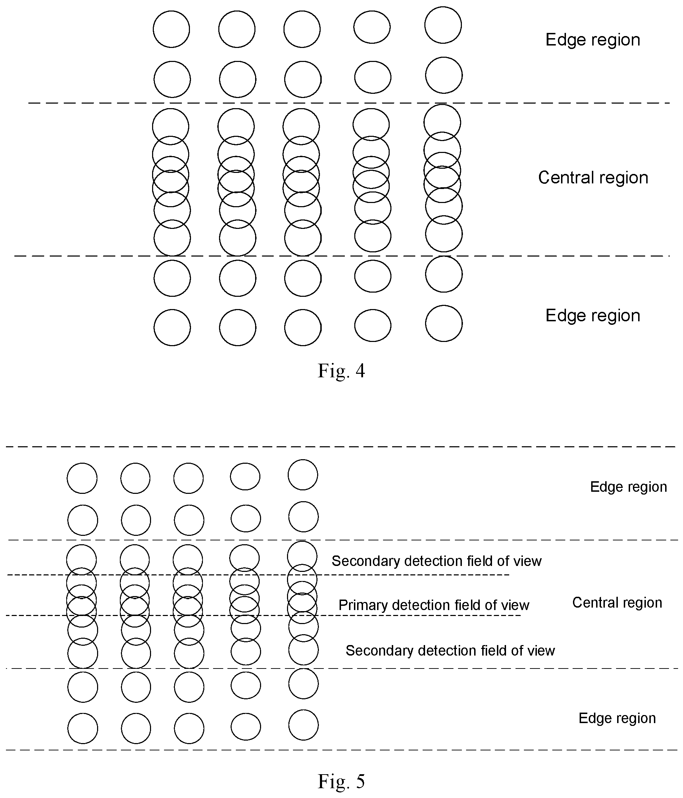

It can be understood that the forgoing preset stepping may also be set according to the detection requirement of different scanning regions, for example, as shown in Fig. 4, when the size of emergent light spots of respective emitters is the same, and an arrangement density is the same, if the accuracy of the detection required by a central region is higher, an overlapping rate of the light spots is needed to be higher, and the stepping size is to be smaller. If the accuracy of the detection required by an edge region is low, the overlapping rate of the light spots is designed to be smaller, and the stepping size of the edge region is to be larger.

The total detection view is the central region and the edge region. The central region is also known as a target detection region, namely, a ROI region.

It can be understood that the central region also may be designed to have a denser arrangement of lasers with smaller scanning stepping according to the detection requirement of the LiDAR, thereby further improving the overlapping rate of the scanning light spots in the central region and enhancing the accuracy of detection of the small target objects.

Accordingly, in an optional embodiment of this application, before controlling the LiDAR to move by a preset stepping in a scanning direction after the LiDAR completes the task of emitting a detection laser beam via a current emission channel, and emitting the detection laser beam via the next emission channel, the method further includes:
obtaining a detection region corresponding to the current emission channel; and determining a stepping size for movement corresponding to the current emission channel in the scanning direction according to the detection region corresponding to the current channel.

It can be understood that determining the stepping size for movement corresponding to the current emission channel in the scanning direction according to the detection region corresponding to the current channel includes:
obtaining the resolution of the detection region corresponding to the current channel;
determining the overlapping rate of the light spots of the detection region according to the resolution of the detection region; and
determining the stepping size in the scanning direction corresponding to the current emission channel according to the overlapping rate of the light spots and the divergence angle of the scanning light spot.

It can be understood that in an optional embodiment of this application, when the LiDAR has two scanning directions, determining the overlapping rate of the light spots of the detection region according to the resolution of the detection region includes:
determining an overlapping rate of light spots in a first scanning direction and/or an overlapping rate of light spots in a second scanning direction of the detection region, according to the resolution of the detection area.

The step of determining the stepping quantity in the scanning direction corresponding to the current emission channel according to the overlapping rate of the light spots includes:
determining the stepping quantity in the first scanning direction and/or the second scanning direction corresponding to the current emission channel, according to the overlapping rate of the light spots in the first scanning direction and/or the overlapping rate of the light spots in the second scanning direction of the detection region, as well as the divergence angle of the scanned light spots in the first scanning direction and/or the divergence angle of the scanned light spots in the second scanning direction.

It can be understood that the central region may include at least one level of detection field of view, such as a primary detection field of view, a secondary detection field of view. It can be understood that this application does not limit the number of detection fields of view included in the central region.

It can be understood that for different detection fields of view in the central region, the overlapping rates of the corresponding light spots are different. Specifically, as shown in Fig. 5, the central region includes a primary detection field of view and a secondary detection field of view. The light spot corresponding to the primary detection field of view has the highest degree of overlapping and the highest detection accuracy. The light spots of the two secondary detection field of view have the same degree of overlapping. The degree of overlapping of the light spots of the secondary detection field of view is less than the degree of overlapping of light spots of a primary target detection field of view, and greater than the degree of overlapping of the detection field of view at an edge.

Accordingly, in an optional embodiment of this application, before controlling the LiDAR to move by a preset stepping in a scanning direction after the LiDAR completes the task of emitting a detection laser beam via a current emission channel, and emitting the detection laser beam via the next emission channel, the method further includes:
obtaining the detection region corresponding to the current emission channel;
obtaining the detection field of view for the central region in which the detection region is located, when the detection region is in the central region; and
determining the stepping size for movement corresponding to the current emission channel in the scanning direction according to the detection field of view corresponding to the detection region to which a current channel corresponds.

In another optional embodiment of this application, the forgoing LiDAR may include a scanning apparatus. Controlling the LiDAR to move by the preset stepping in the scanning direction may be controlling the scanning apparatus to move by the preset stepping in the scanning direction.

In a specific implementation, the forgoing scanning apparatus may be a scanning galvanometer, a rotating mirror, a rotating platform, and the like. This application does not make any limitation on the specific form of the scanning apparatus.

It can be understood that controlling the LiDAR to move by the preset stepping in the scanning direction may be controlling the scanning device to move by the preset stepping in one direction. For example, the scanning apparatus is controlled to move by the preset stepping in a scanning horizontal direction, and also controlled to move by the preset stepping in a scanning vertical direction.

It can be understood that controlling the LiDAR to move by the preset stepping in the scanning direction may be controlling the scanning apparatus to move by the preset stepping in two directions at the same time. For example, the scanning apparatus is controlled to move by the preset stepping in the vertical direction and the horizontal direction. It should be noted that the LiDAR controls one scanning apparatus so that the LiDAR moves by the preset stepping in the horizontal and vertical directions. For example, the LiDAR may move the emergent light spot to move by the preset stepping in the horizontal and vertical directions by means of a 2D galvanometer. It can be understood that the LiDAR may also control at least two scanning apparatuses so that the LiDAR moves by the preset stepping in the horizontal and vertical directions. For example, the LiDAR may realize scanning in the vertical direction by means of the galvanometer and the scanning in the horizontal direction by means of a rotating mirror. It can be understood that the LiDAR may also realize the scanning in the vertical direction by means of a first rotating mirror and the scanning in the horizontal direction by means of a second rotating mirror. Optionally, the LiDAR may also realize the scanning in the vertical direction by means of the galvanometer and the scanning in the horizontal direction by means of a rotating platform. This application does not limit the types and combinations of the scanning apparatuses in both the vertical and horizontal directions specific to this application. It can be understood that as a preferred implementation of this application, the scanning in both directions of the LiDAR may be controlled independently.

Controlling the scanning apparatus to move by the preset stepping in the vertical direction and the horizontal direction simultaneously may be controlling the scanning apparatus to move by the preset stepping corresponding to the horizontal direction in the scanning horizontal direction while controlling the scanning apparatus to move by the preset stepping corresponding to the vertical direction in the scanning vertical direction.

In an embodiment of this application, the forgoing LiDAR may include an emission surface array. Controlling the LiDAR to move by the preset stepping in the scanning direction may be realized by controlling a spacing of two emission blocks corresponding to two adjacent emissions in the emission surface array, so that the scanning light spots are overlapped when any emission block corresponding to the two adjacent emissions is emitted.

Exemplarily, referring to Fig. 2, Fig. 2 shows a schematic diagram of a scanning scenario of the LiDAR controlling method provided by an embodiment of this application.

For example, as for controlling the LiDAR to move by the preset stepping in the scanning horizontal direction, as shown in Fig. 2, it is assumed that the LiDAR each time the LiDAR moves in the scanning horizontal direction is Δθ, and the size of scanning light spots of respective emission channels in the horizontal direction is δθ. After the LiDAR emits a signal of a first emission channel (corresponding to a scanning light spot of the first emission channel), the LiDAR is controlled to move by one stepping Δθ in the scanning horizontal direction. A second emission channel is controlled to emit a detection laser beam to scan a range corresponding to the scanning light spot of the second emission channel. After the second emission channel emits a signal, the LiDAR is further controlled to move by one stepping Δθ in the scanning horizontal direction. A third emission channel is controlled to emit a detection laser beam to scan a range corresponding to the scanning light spot of the third emission channel, and so on, until the signals via all the emission channels are emitted.

Referring to Fig. 3, Fig. 3 shows a schematic diagram of an overlapping situation of the scanning light spots of the respective emission channels in an embodiment of this application.

As may be seen from Fig. 3, the scanning light spots of the adjacent emission channels in the left and right sides of the current emission channel are overlapped with the scanning light spot of the current emission channel in the horizontal direction.

To reduce signal interference (i.e., crosstalk) between the different emission channels, the LiDAR may control the emission channels of adjacent emissions to emit the laser beam according to the corresponding jitter delays thereof. The LiDAR may set the corresponding jitter delays for the respective parallel emission channels.

In a specific application, when the LiDAR controls the first emission channel to emit the detection laser beam, the LiDAR delays jitter corresponding to the first emission channel of an emission time delay and emits the detection laser beam when the jitter delay time corresponding to the first emission channel is reached in the first emission channel. When the LiDAR controls the second emission channel to emit the detection laser beam, the LiDAR delays jitter corresponding to the second emission channel of the emission time delay and emits the detection laser beam when the jitter delay time corresponding to the second emission channel is reached in the second emission channel.

In an embodiment of this application, the degree of correlation of the jitter delay of the forgoing respective emission channels is less than a preset threshold.

In a specific application, the jitter delay of the emission channel is randomized. A pseudo-random sequence may be used as a jitter-time coding sequence for the emission channel, i.e., the jitter delay of the respective emission channels for parallel emission is set according to the pseudo-random sequence. However, if the mutual correlation between the pseudo-random sequences is larger, the laser beam emitted between the emission channels of the parallel emission is prone to interfere with the other channels. Therefore, to reduce the interference between the emission channels, a cross-correlation function of the respective pseudo-random sequences may be obtained. The correlation degree of the jitter delay of the respective emission channels may be calculated according to the cross-correlation function. The jitter delay with the degree of mutual correlation less than a preset threshold is selected.

In practice, the cross-correlation function of the plurality of pseudo-random sequences may be determined by the following formula: $CCR \left(a, b, τ\right) = {\sum }_{i = 0}^{P} {a}_{i} {b}_{i + τ} ;$ where CCR(a,b,τ) is the cross-correlation function. ***aᵢ*** denotes a pseudo-random coding sequence of the current emission channel. *b*_{*i*+*τ*} denotes the corresponding pseudo-random coding sequences of the adjacent emission channels for the parallel emission.

A pair of pseudo-random sequences with a cross-correlation coefficient less than the preset threshold is selected as the jitter delay of the current emission channel and the jitter delay of the next emission channel. In accordance with the forgoing manner, the jitter delay corresponding to each emission channel in the LiDAR may be determined.

The forgoing preset threshold may be related to the physical distance between adjacent emission channels. It is understood that the closer the distance, the smaller the cross-correlation coefficient between parallel emission channels, which is set according to the actual requirement. This application does not make any specific limitation thereto.

In an embodiment of this application, the jitter delays of the forgoing respective emission channels are not equal. The cross-correlation of the forgoing pseudo-random sequence minimizes in the case of unequal jitter time delays of the respective emission channels.

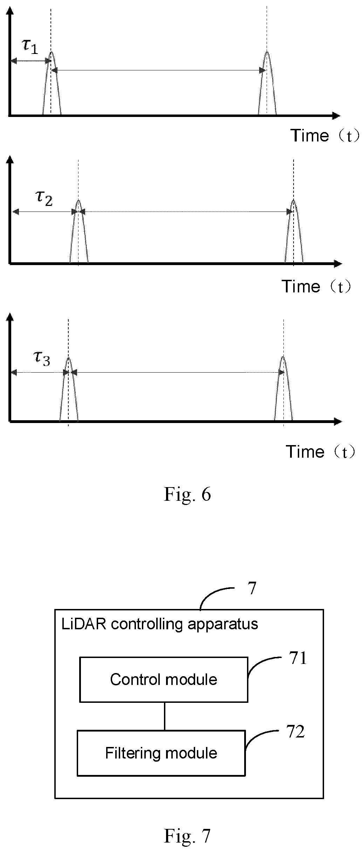

Exemplarily, referring to Fig. 6, Fig. 6 shows a schematic diagram of a signal emission process of a LiDAR controlling method provided by an embodiment of this application.

As shown in Fig. 6, for example, the LIDAR may have three emission channels for the parallel emission. The first emission channel has a jitter delay of τ1. The second emission channel has a jitter delay of τ2. The third emission channel has a jitter delay of τ3.

The degree of cross-correlation of τ1, τ2 and τ3 is less than the preset threshold.

S12. Filter echo data received by a current receiving channel according to echo data received by adjacent receiving channels, to obtain a scanning result of the current receiving channel.

In a specific application, when the LiDAR emits the detection laser beam through the respective emission channels, the detection laser beam is reflected by the target object, i.e., an echo signal is reflected by the target object. The LiDAR may receive the echo signal through the receiving channel corresponding to the emission channel. The echo signal received by the receiving channel is the echo data received by the receiving channel as described above. After the respective emission channels emit the detection laser beam, the echo data are received by the receiving channel corresponding to the emission channel. Then, an interference signal is identified and detected according to the echo data received by the plurality of receiving channels.

In an embodiment of this application, the forgoing echo data received by the current receiving channel is the echo data received by the current receiving channel within a preset time; or the forgoing echo data received by the current receiving channel is the echo data received by the current receiving channel according to the echo data received by the adjacent receiving channels after the preset region is scanned.

In a specific application, the preset time or the preset region is set so that when the echo data is obtained, the echo data within a preset time period is obtained or the echo data obtained after the preset region is scanned is obtained. Therefore, only the echo data received by the current receiving channel within the preset time may be filtered, or only the echo data received by the current receiving channel after the preset region is scanned is filtered. Without having to wait for the completion of the scanning of the data of the whole frame, the data is filtered. The echo signals are outputted, which reduces the amount of computation of each filtering and improves detection efficiency.

The forgoing preset time and the preset region may be set according to the actual requirement. This application does not make any specific limitation thereto.

In an embodiment of this application, S12 may include the following steps:
aligning the detection time of the echo data received by the adjacent receiving channels and the detection time of the echo data received by the current receiving channel according to the jitter delay to obtain the echo data of the adj acent receiving channels corresponding to the same emission according to the echo data of the current receiving channel;
identifying interference data from the echo data received by the current receiving channel according to echo data received by the adjacent receiving channels at the same time, and deleting the interference data.

In a specific application, by delaying jitter emission, the crosstalk and noise, which occur randomly, do not appear at the same moment in different receiving channels. Therefore, the detection time of the signal received by the receiving channel is aligned according to the jitter delay. Then, it is determined whether the detection time of the signal in the echo data received by the adjacent receiving channels is the same as that of the signal received in the echo data received by the current receiving channel. If not, it is confirmed that the signal is the interference signal. The detected interference signal is deleted from the scanning result of the echo data received by the current receiving channel.

According to the invention, S12 includes the following steps:
identifying whether a target point is the noise point according the echo data received by the adjacent receiving channels when the echo data received by the current receiving channel includes a target point; and when the target point is noise point, deleting the echo data corresponding to the target point.

For the small target object, due to the overlapping of the scanning spots of different channels, both the current channel and the two adjacent channels may detect the target point corresponding to the small target object. Therefore, the echo data received by the adjacent channels may be utilized to verify whether the detected target point in the echo data received by the current channel is the noise point or the effective point.

It should be noted that the adjacent channels referred to in an embodiment of this application are the previous channel of the current channel and the next channel of the current channel. For example, taking as an example the second channel in Fig. 2, the adjacent channels of the second channel are a first channel and a third channel.

Exemplarily, when scanning is realized by the scanning apparatus, the forgoing adjacent channels may be two channels in the left and right sides of the current channels in the case of moving only in the scanning horizontal direction. The forgoing adjacent channels may be two channels at the top and bottom of the current channels in the case of moving only in the scanning vertical direction. The adjacent channels are four channels at the top and bottom and in the left and right sides of the current channels in the case of moving in the scanning horizontal direction and the scanning vertical direction at the same time.

Exemplarily, when scanning is realized by the emission surface array, the forgoing adjacent channels may be the previous emission block and/or the next emission block of a current emission block.

In an embodiment of this application, identifying whether the target point is the noise point according to the echo data received by the adjacent receiving channels when the echo data received by the current receiving channel includes the target point may include the following steps:
determining whether the echo data received by the adjacent receiving channels includes an effective point corresponding to the target point; and
when the echo data received by the adjacent receiving channels includes the effective point corresponding to the target point, determining that the target point is the effective point; otherwise, determining that the target point is the noise point.

In a specific application, as an overlapping portion exists between the scanning light spot of the current channel and the scanning light spot of the adjacent channel, when an isolated existing target point is detected in a channel, the echo data received by the adjacent channels may be associated to detect the target point. If the echo data received by any of the adjacent channels also includes the effective point corresponding to the target point, it may be determined that the target point is a target object that really exists, and is not noise. If the adjacent channels do not have the effective point corresponding to the target point, it may be determined that the isolated existing target point is noise and is not the target object that really exists. Therefore, the probability of the LiDAR to detect the small target object and the ability of the LiDAR to detect the small target object are improved.

In an embodiment of this application, determining whether the echo data received by the adjacent receiving channels includes an effective point corresponding to the target point may include the following steps:
obtaining position information of the target point; and determining whether the echo data received by the adjacent receiving channels includes the effective point corresponding to the target point according to the position information of the target point.

In a specific application, when the target object really exists, the position of the target object is fixed or only moves within a certain range. Therefore, to determine whether the isolated target point is the effective point, the echo data received by the current receiving channel may be utilized to determine the position information of the target point, such as position coordinates, latitude and longitude coordinates. Then, it is determined whether the echo data received by the adjacent receiving channels detects the same position or whether the effective point exists within a certain position range. If the effective point exists within a certain position range, it means that the target point corresponds to the target object that really exists rather than a noise signal that randomly appears. Therefore, the target point is identified as the effective point. Otherwise, the effective point is identified as the noise point.

It should be noted that the forgoing certain position range may be set according to a measurement scenario. This application does not make any specific limitation thereto.

It also should be noted that the manner of determining the position information of the target point according to the echo data may refer to the existing methods of analyzing the echo data, which are not described in this application again.

In an embodiment of this application, determining whether the echo data received by the adjacent receiving channels includes the effective point corresponding to the target point may include the following steps:
obtaining detection time of the target point; and determining whether the echo data received by the adjacent receiving channels includes the effective point corresponding to the target point according to the detection time of the target point.

In a specific application, for the target object that really exists, as the detection time is similar for different channels, the detection time of the target point in the echo data corresponding to the different receiving channels may be utilized to determine whether the target point is the effective point, i.e., if the detection time of the target point in the echo data corresponding to the different receiving channels is the same or a difference value is in a preset range, the target point is determined to be the effective point. Otherwise, the target point is determined to be the noise point.

It should be noted that the manner of determining the detection time of the target point according to the echo data may refer to the existing methods of analyzing the echo data, which are not described in this application again.

As may be seen above, the LiDAR controlling method provided by an embodiment of this application controls the LiDAR to emit the detection laser beam according to the coding manner of the single-emission jitter, i.e., each emission channel emits the detection laser beam only once, which can reduce the overall power consumption of the LiDAR. Then, the stepping of the movement of the LiDAR is set to be less than a divergence angle of the scanning light spot of the current emission channel, so that the scanning light spots between adjacent emission channels are overlapped, thereby enhancing the correlation of the adjacent emission channels. Therefore, the echo data received by the adjacent emission channel are utilized to filter the echo data received by a target emission channel, which reduces the problems of mistakenly identifying the effective point as noise, improves the ability of the LiDAR to detect the small target object, and increases the detection accuracy of the LiDAR.

It should be understood that the size of sequence number of each step in the foregoing embodiments does not mean an execution sequence. An execution sequence of each process should be determined based on a function and internal logic of each process, and should not constitute any limitation to an implementation process of the embodiments of this application.

Based on the LiDAR controlling method provided in the foregoing embodiment, embodiments of the present invention further provide an embodiment of a LiDAR controlling apparatus for implementing the foregoing method embodiment.

Referring to Fig. 7, Fig. 7 is a schematic structural diagram of a LiDAR controlling apparatus according to an embodiment of this application. In an embodiment of this application, each unit included in the LiDAR controlling apparatus is configured to perform each step in the embodiment corresponding to Fig. 1. For details, refer to Fig. 1 and related descriptions in the embodiment corresponding to Fig. 1. For ease of description, only a portion related to this embodiment is shown. As shown in Fig. 7, the LiDAR controlling apparatus 7 includes a control module 71 and a filtering module 72.

The control module 71 is configured to control the LiDAR to move by a preset stepping in a scanning direction after the LiDAR completes the task of emitting a detection laser beam of a current emission channel, and emit a detection laser beam via the next emission channel until the tasks of emitting the detection laser beam are completed via all emission channels.

The preset stepping is less than a divergence angle of a scanning light spot of the current emission channel. The current emission channel emits the detection laser beam according to a jitter delay corresponding to the current emission channel when the current emission channel emits the detection laser beam.

The filtering module 72 is configured to filter echo data received by a current receiving channel according to echo data received by adjacent receiving channels to obtain the scanning result of a current receiving channel.

In one embodiment of this application, the forgoing filtering module 72 includes a first filtering unit.

The first filtering unit is configured to align the detection time of the echo data received by the adjacent receiving channels and the detection time of the echo data received by the current receiving channel according to the jitter delay, identify interference data from the echo data received by the current receiving channel according to the echo data received by the adjacent receiving channels, and delete the interference data.

According to the invention, the forgoing filtering module 72 includes a second filtering unit.

The second filtering unit is configured to identify whether a target point is a noise point according to the echo data received by the adjacent receiving channels when the echo data received by the current receiving channel includes the target point, and when the target point is the noise point, delete the echo data corresponding to the target point.

In one embodiment of this application, the forgoing second filtering unit is specifically configured to determine whether the echo data received by the adjacent receiving channels includes an effective point corresponding to the target point. When the echo data received by the adjacent receiving channels includes the effective point corresponding to the target point, it is determined that the target point is the effective point. Otherwise, it is determined that the target point is the noise point.

In one embodiment of this application, the forgoing second filtering unit includes a first obtaining unit and a first determining unit.

The first obtaining unit is configured to obtain position information of the target point.

The first determining unit is configured to determine whether the echo data received by the adjacent receiving channels includes the effective point corresponding to the target point according to the position information of the target point.

In one embodiment of this application, the second filtering unit includes a second obtaining unit and a second determining unit. The second obtaining unit is configured to obtain the detection time of the target point.

The second determining unit is configured to determine whether the echo data received by the adjacent receiving channels includes the effective point corresponding to the target point according to the detection time of the target point.

It should be noted that content such as information exchange and an execution process between the foregoing units is based on the same concept as the method embodiments of this application. For specific functions and technical effects thereof, reference may be made to the method embodiments.

As may be seen above, the LiDAR controlling apparatus provided by an embodiment of this application can control the LiDAR to emit the detection laser beam according to the coding manner of the single-emission jitter, namely, each emission channel emits the detection laser beam only once, which can reduce the overall power consumption of the LiDAR. Then, the stepping for the movement of the LiDAR is set to be less than a divergence angle of the scanning light spot of the current emission channel, so that the scanning light spots between adjacent emission channels are overlapped, thereby enhancing the correlation of the adjacent emission channels. Therefore, the echo data received by the adjacent emission channel is utilized to filter the echo data received by a target emission channel, which reduces the problems of mistakenly identifying the effective point as noise, improves the ability of the LiDAR to detect the small target object, and increases the detection accuracy of the LiDAR.

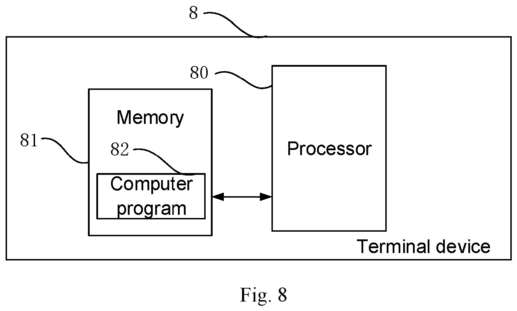

Fig. 8 is a schematic structural diagram of a terminal device provided by another embodiment of the present application. As shown in Fig. 8, the terminal device 8 provided by the embodiment includes a processor 80, a memory 81, and a computer program 82 stored in the memory 81 and executable on the processor 80, for example, an image segmentation program. When executing the computer program 82, the processor 80 performs the steps in each embodiment of the LiDAR controlling method, for example, step S11 to step S12 shown in Fig. 1. Alternatively, when executing the computer program 82, the processor 80 implements functions of the modules or units in each embodiment of the terminal device, for example, functions of the units 71 to 72 shown in Fig. 7.

Exemplarily, the computer program 82 can be divided into one or more modules/units. The one or more modules/units are stored in the memory 81 and executed by the processor 80 to complete this application. The one or more modules/units can be a series of computer program instruction fields capable of performing specific functions. The instruction fields are configured to describe an execution process of the computer program 82 in the terminal device 8. For example, the computer program 82 can be divided into a plurality of units. For specific functions of the units, refer to relevant descriptions in the embodiment corresponding to Fig. 7. Details are described herein again.

The terminal device may include, but is not limited to, the processor 80 and the memory 81. A person skilled in the art can understand that Fig. 8 is only an example of the terminal device 8, and does not constitute a limitation to the terminal device 8. The terminal device may include more or fewer components than those shown in the figure, or a combination of some components, or different components. For example, the terminal device may also include input and output devices, a network access device, a bus, and the like.

The processor 80 may be a central processing unit (CPU), or may be another general-purpose processor, a digital signal processor (DSP), an application specific integrated circuit (ASIC), a field-programmable gate array (FPGA) or another programmable logic device, a discrete gate or transistor logic device, a discrete hardware component, or the like. The general-purpose processor can be a microprocessor, or the processor can be any conventional processor or the like.

The memory 81 may be an internal storage unit of the terminal device 8, such as a hard disk or a memory of the terminal device 8. The memory 81 may alternatively be an external storage device of the terminal device 8, for example, a plug-connected hard disk, a smart media card (Smart Media Card, SMC), a secure digital (Secure Digital, SD) card, or a flash card (Flash Card) equipped on the terminal device 8. Further, the memory 81 may alternatively include both the internal storage unit and the external storage device of the terminal device 8. The memory 81 is configured to store the computer program and other program and data required by the terminal device. The memory 81 can also be configured to temporarily store output data or to-be-output data.

An embodiment of this application also provides a computer-readable storage medium. The computer-readable storage medium stores computer program, and when the computer program is executed by a processor, the foregoing LiDAR controlling method can be implemented.

An embodiment of this application provides a computer program product When the computer program product is executed on a terminal device, the terminal device performs the foregoing LiDAR controlling method.

A person skilled in the art can clearly understand that, for ease and brevity of description, division of the foregoing functional units and modules is taken as an example for illustration. In actual application, the foregoing functions can be allocated to different units and modules and implemented according to a requirement, that is, an inner structure of the terminal device is divided into different functional units and modules to implement all or a part of the functions described above. The functional units and modules in the embodiments may be integrated into one processing unit, or each unit may exist alone physically, or two or more units may be integrated into one unit. The integrated unit may be implemented in a form of hardware, or may be implemented in a form of a software functional unit. In addition, specific names of the functional units and modules are only for the convenience of distinguishing one another, and are not intended to limit the protection scope of this application. For a detailed working process of units and modules in the foregoing system, reference may be made to a corresponding process in the foregoing method embodiments. Details are not described again herein.

In the foregoing embodiments, the descriptions of the embodiments have respective focuses. For a part that is not described in detail in one embodiment, reference may be made to related descriptions in other embodiments.

A person skilled in the art may be aware that the units and algorithm steps in the examples described with reference to the embodiments disclosed in this specification can be implemented by an electronic hardware or a combination of computer software and the electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A LiDAR controlling method, comprising:
controlling a LiDAR to move by a preset stepping in a scanning direction after the LiDAR completes a task of emitting a detection laser beam via a current emission channel, and emitting a detection laser beam via a next emission channel (S11),
**characterized in that**,
wherein the preset stepping is less than a divergence angle of a scanning light spot of the current emission channel, so that the scanning light spots between adjacent emission channels are overlapped; and
the current emission channel emits the detection laser beam according to a jitter delay corresponding to the current emission channel, and
the LiDAR controlling method further comprises filtering echo data received by a current receiving channel according to echo data received by adjacent receiving channels to obtain a scanning result of the current receiving channel (S12),
wherein filtering echo data received by a current receiving channel according to echo data received by adjacent receiving channels to obtain a scanning result of the current receiving channel comprises:
identifying whether a target point is a noise point according to the echo data received by the adjacent receiving channels when the echo data received by the current receiving channel comprises the target point; and
when the target point is the noise point, deleting the echo data corresponding to the target point.

2. The LiDAR controlling method according to claim 1, wherein before controlling the LiDAR to move by a preset stepping in a scanning direction after the LiDAR completes a task of emitting a detection laser beam via a current emission channel, and emitting the detection laser beam via the next emission channel, the method further comprises:
obtaining a detection region corresponding to the current emission channel; and
determining a stepping size for movement corresponding to the current emission channel in the scanning direction according to the detection region corresponding to the current channel.

3. The LiDAR controlling method according to claim 1, wherein identifying whether a target point is a noise point according to the echo data received by the adjacent receiving channels when the echo data received by the current receiving channel comprises the target point comprises:
determining whether the echo data received by the adjacent receiving channels comprises an effective point corresponding to the target point; and
when the echo data received by the adjacent receiving channels comprises the effective point corresponding to the target point, determining that the target point is the effective point; otherwise, determining that the target point is the noise point.

4. The LiDAR controlling method according to claim 3, wherein determining whether the echo data received by the adjacent receiving channels comprises an effective point corresponding to the target point comprises:
obtaining position information of the target point; and
determining whether the echo data received by the adjacent receiving channels comprises the effective point corresponding to the target point according to the position information of the target point.

5. The LiDAR controlling method according to claim 3, wherein determining whether the echo data received by the adjacent receiving channels comprises the effective point corresponding to the target point comprises:
obtaining detection time of the target point; and
determining whether the echo data received by the adjacent receiving channels comprises the effective point corresponding to the target point according to the detection time of the target point.

6. The LiDAR controlling method according to any one of claims 1 to 4, wherein the echo data received by the current receiving channel is echo data received by the current receiving channel during a preset time; or the echo data received by the current receiving channel is echo data received by the current receiving channel after a preset region is scanned.

7. A LiDAR controlling apparatus (7), comprising:
a control module (71), configured to control a LiDAR to move by a preset stepping in a scanning direction after the LiDAR completes a task of emitting a detection laser beam via a current emission channel, and control a next emission channel to emit a detection laser beam until tasks of emitting detection laser beams are completed via all emission channels,
**characterized in that**,
wherein the preset stepping is less than a divergence angle of a scanning light spot of the current emission channel, so that the scanning light spots between adjacent emission channels are overlapped; and the detection laser beam is emitted by the current emission channel according to a jitter delay corresponding to the current emission channel, and
the LiDAR controlling apparatus further comprises a filtering module (72), configured to filter echo data received by a current receiving channel according to echo data received by adjacent receiving channels to obtain a scanning result of the current receiving channel,
wherein the filtering module (72) includes a second filtering unit configured to:
identify whether a target point is a noise point according to the echo data received by the adjacent receiving channels when the echo data received by the current receiving channel comprises the target point; and
when the target point is the noise point, delete the echo data corresponding to the target point.

8. A terminal device, comprising a memory, a processor and a computer program stored in the memory and executable on the processor, wherein the computer program, when executed by the processor, causes the processor to carry out the LiDAR controlling method according to any one of claims 1 to 6.

## Patentansprüche

1. LiDAR-Steuerungsverfahren, umfassend:
Steuern eines LiDAR derart, dass es sich nach Abschluss einer Aufgabe des Aussendens eines Detektionslaserstrahls über einen gegenwärtigen Emissionskanal um eine voreingestellte Schrittweite in einer Abtastrichtung bewegt, und Aussenden eines Detektionslaserstrahls über einen nächsten Emissionskanal (S11),
**dadurch gekennzeichnet, dass**
die voreingestellte Schrittweite kleiner als ein Divergenzwinkel eines Abtastlichtflecks des gegenwärtigen Emissionskanals ist, sodass die Abtastlichtflecke zwischen benachbarten Emissionskanälen einander überlappen; und
der gegenwärtige Emissionskanal den Detektionslaserstrahl gemäß einer dem gegenwärtigen Emissionskanal entsprechenden Jitter-Verzögerung aussendet, und
das LiDAR-Steuerungsverfahren ferner ein Filtern von Echodaten, die von einem gegenwärtigen Empfangskanal empfangen werden, gemäß Echodaten, die von benachbarten Empfangskanälen empfangen werden, umfasst, um ein Abtastergebnis des gegenwärtigen Empfangskanals zu ermitteln (S12),
wobei das Filtern von Echodaten, die von einem gegenwärtigen Empfangskanal empfangen werden, gemäß Echodaten, die von benachbarten Empfangskanälen empfangen werden, um ein Abtastergebnis des gegenwärtigen Empfangskanals zu ermitteln, Folgendes umfasst:
Identifizieren, ob ein Zielpunkt ein Rauschpunkt ist, gemäß den von den benachbarten Empfangskanälen empfangenen Echodaten, wenn die von dem gegenwärtigen Empfangskanal empfangenen Echodaten den Zielpunkt umfassen; und,
wenn der Zielpunkt der Rauschpunkt ist, Löschen der dem Zielpunkt entsprechenden Echodaten.

2. LiDAR-Steuerungsverfahren nach Anspruch 1, wobei vor dem Steuern des LiDAR derart, dass es sich nach Abschluss einer Aufgabe des Aussendens eines Detektionslaserstrahls über einen gegenwärtigen Emissionskanal um eine voreingestellte Schrittweite in einer Abtastrichtung bewegt, und dem Aussenden des Detektionslaserstrahls über den nächsten Emissionskanal, das Verfahren ferner Folgendes umfasst:
Ermitteln eines Detektionsbereichs, der dem gegenwärtigen Emissionskanal entspricht; und
Bestimmen einer Schrittweite für eine Bewegung in der Abtastrichtung, die dem gegenwärtigen Emissionskanal entspricht, gemäß dem Detektionsbereich, der dem gegenwärtigen Kanal entspricht.

3. LiDAR-Steuerungsverfahren nach Anspruch 1, wobei das Identifizieren, ob ein Zielpunkt ein Rauschpunkt ist, gemäß den von den benachbarten Empfangskanälen empfangenen Echodaten, wenn die von dem gegenwärtigen Empfangskanal empfangenen Echodaten den Zielpunkt umfassen, Folgendes umfasst:
Bestimmen, ob die von den benachbarten Empfangskanälen empfangenen Echodaten einen gültigen Punkt umfassen, der dem Zielpunkt entspricht; und,
wenn die von den benachbarten Empfangskanälen empfangenen Echodaten den gültigen Punkt umfassen, der dem Zielpunkt entspricht, Bestimmen, dass der Zielpunkt der gültige Punkt ist; andernfalls Bestimmen, dass der Zielpunkt der Rauschpunkt ist.

4. LiDAR-Steuerungsverfahren nach Anspruch 3, wobei das Bestimmen, ob die von den benachbarten Empfangskanälen empfangenen Echodaten einen gültigen Punkt umfassen, der dem Zielpunkt entspricht, Folgendes umfasst:
Ermitteln von Positionsinformationen des Zielpunkts; und
Bestimmen, ob die von den benachbarten Empfangskanälen empfangenen Echodaten den gültigen Punkt, der dem Zielpunkt entspricht, gemäß den Positionsinformationen des Zielpunkts umfassen.

5. LiDAR-Steuerungsverfahren nach Anspruch 3, wobei das Bestimmen, ob die von den benachbarten Empfangskanälen empfangenen Echodaten den gültigen Punkt umfassen, der dem Zielpunkt entspricht, Folgendes umfasst:
Ermitteln einer Detektionszeit des Zielpunkts; und
Bestimmen, ob die von den benachbarten Empfangskanälen empfangenen Echodaten den gültigen Punkt, der dem Zielpunkt entspricht, gemäß der Detektionszeit des Zielpunkts umfassen.

6. LiDAR-Steuerungsverfahren nach einem der Ansprüche 1 bis 4, wobei die von dem gegenwärtigen Empfangskanal empfangenen Echodaten Echodaten sind, die von dem gegenwärtigen Empfangskanal während einer voreingestellten Zeit empfangen werden; oder die von dem gegenwärtigen Empfangskanal empfangenen Echodaten Echodaten sind, die von dem gegenwärtigen Empfangskanal empfangen werden, nachdem ein voreingestellter Bereich abgetastet worden ist.

7. LiDAR-Steuerungsvorrichtung (7), umfassend:
ein Steuermodul (71), das dazu ausgebildet ist, ein LiDAR derart zu steuern, dass es sich nach Abschluss einer Aufgabe des Aussendens eines Detektionslaserstrahls über einen gegenwärtigen Emissionskanal um eine voreingestellte Schrittweite in einer Abtastrichtung bewegt, und einen nächsten Emissionskanal derart zu steuern, dass dieser einen Detektionslaserstrahl aussendet, bis Aufgaben des Aussendens von Detektionslaserstrahlen über alle Emissionskanäle abgeschlossen sind,
**dadurch gekennzeichnet, dass**
die voreingestellte Schrittweite kleiner als ein Divergenzwinkel eines Abtastlichtflecks des gegenwärtigen Emissionskanals ist, sodass die Abtastlichtflecke zwischen benachbarten Emissionskanälen einander überlappen; und der Detektionslaserstrahl durch den gegenwärtigen Emissionskanal gemäß einer dem gegenwärtigen Emissionskanal entsprechenden Jitter-Verzögerung ausgesendet wird, und
die LiDAR-Steuerungsvorrichtung ferner ein Filtermodul (72) umfasst, das dazu ausgebildet ist, Echodaten, die von einem gegenwärtigen Empfangskanal empfangen werden, gemäß Echodaten, die von benachbarten Empfangskanälen empfangen werden, zu filtern, um ein Abtastergebnis des gegenwärtigen Empfangskanals zu ermitteln,
wobei das Filtermodul (72) eine zweite Filtereinheit enthält, die dazu ausgebildet ist:
zu identifizieren, ob ein Zielpunkt ein Rauschpunkt ist, gemäß den von den benachbarten Empfangskanälen empfangenen Echodaten, wenn die von dem gegenwärtigen Empfangskanal empfangenen Echodaten den Zielpunkt umfassen; und,
wenn der Zielpunkt der Rauschpunkt ist, die dem Zielpunkt entsprechenden Echodaten zu löschen.

8. Endgerät, umfassend einen Speicher, einen Prozessor und ein Computerprogramm, das in dem Speicher gespeichert und auf dem Prozessor ausführbar ist, wobei das Computerprogramm, wenn es durch den Prozessor ausgeführt wird, den Prozessor veranlasst, das LiDAR-Steuerungsverfahren nach einem der Ansprüche 1 bis 6 auszuführen.

## Revendications

1. Procédé de commande de LiDAR, comprenant :
le fait de commander un LiDAR pour qu'il se déplace d'un pas prédéfini dans une direction de balayage après que le LiDAR a terminé une tâche d'émission d'un faisceau laser de détection par l'intermédiaire d'un canal d'émission actuel, et d'émettre un faisceau laser de détection par l'intermédiaire d'un canal d'émission suivant (S11),
**caractérisé en ce que**
le pas prédéfini est inférieur à un angle de divergence d'une tache lumineuse de balayage du canal d'émission actuel, de sorte que les taches lumineuses de balayage entre des canaux d'émission adjacents se chevauchent ; et
le canal d'émission actuel émet le faisceau laser de détection selon un retard de gigue correspondant au canal d'émission actuel, et
le procédé de commande de LiDAR comprend en outre le fait de filtrer des données d'écho reçues par un canal de réception actuel selon des données d'écho reçues par des canaux de réception adjacents pour obtenir un résultat de balayage du canal de réception actuel (S12),
dans lequel le fait de filtrer des données d'écho reçues par un canal de réception actuel selon des données d'écho reçues par des canaux de réception adjacents pour obtenir un résultat de balayage du canal de réception actuel comprend :
le fait d'identifier si un point cible est un point de bruit selon les données d'écho reçues par les canaux de réception adjacents, lorsque les données d'écho reçues par le canal de réception actuel comprennent le point cible ; et
lorsque le point cible est le point de bruit, le fait de supprimer les données d'écho correspondant au point cible.

2. Procédé de commande de LiDAR selon la revendication 1, dans lequel, avant de commander le LiDAR pour qu'il se déplace d'un pas prédéfini dans une direction de balayage après que le LiDAR a terminé une tâche d'émission d'un faisceau laser de détection par l'intermédiaire d'un canal d'émission actuel, et d'émettre le faisceau laser de détection par l'intermédiaire du canal d'émission suivant, le procédé comprend en outre :
le fait d'obtenir une région de détection correspondant au canal d'émission actuel ; et
le fait de déterminer une taille de pas pour un déplacement dans la direction de balayage correspondant au canal d'émission actuel selon la région de détection correspondant au canal actuel.

3. Procédé de commande de LiDAR selon la revendication 1, dans lequel le fait d'identifier si un point cible est un point de bruit selon les données d'écho reçues par les canaux de réception adjacents, lorsque les données d'écho reçues par le canal de réception actuel comprennent le point cible, comprend :
le fait de déterminer si les données d'écho reçues par les canaux de réception adjacents comprennent un point valide correspondant au point cible ; et
lorsque les données d'écho reçues par les canaux de réception adjacents comprennent le point valide correspondant au point cible, le fait de déterminer que le point cible est le point valide ; sinon, le fait de déterminer que le point cible est le point de bruit.

4. Procédé de commande de LiDAR selon la revendication 3, dans lequel le fait de déterminer si les données d'écho reçues par les canaux de réception adjacents comprennent un point valide correspondant au point cible comprend :
le fait d'obtenir des informations de position du point cible ; et
le fait de déterminer si les données d'écho reçues par les canaux de réception adjacents comprennent le point valide correspondant au point cible selon les informations de position du point cible.

5. Procédé de commande de LiDAR selon la revendication 3, dans lequel le fait de déterminer si les données d'écho reçues par les canaux de réception adjacents comprennent le point valide correspondant au point cible comprend :
le fait d'obtenir un temps de détection du point cible ; et
le fait de déterminer si les données d'écho reçues par les canaux de réception adjacents comprennent le point valide correspondant au point cible selon le temps de détection du point cible.

6. Procédé de commande de LiDAR selon l'une quelconque des revendications 1 à 4, dans lequel les données d'écho reçues par le canal de réception actuel sont des données d'écho reçues par le canal de réception actuel pendant un temps prédéfini ; ou les données d'écho reçues par le canal de réception actuel sont des données d'écho reçues par le canal de réception actuel après qu'une région prédéfinie a été balayée.

7. Appareil de commande de LiDAR (7), comprenant :
un module de commande (71), configuré pour commander un LiDAR pour qu'il se déplace d'un pas prédéfini dans une direction de balayage après que le LiDAR a terminé une tâche d'émission d'un faisceau laser de détection par l'intermédiaire d'un canal d'émission actuel, et pour commander à un canal d'émission suivant d'émettre un faisceau laser de détection jusqu'à ce que des tâches d'émission de faisceaux laser de détection soient terminées par l'intermédiaire de tous les canaux d'émission,
**caractérisé en ce que**
le pas prédéfini est inférieur à un angle de divergence d'une tache lumineuse de balayage du canal d'émission actuel, de sorte que les taches lumineuses de balayage entre des canaux d'émission adjacents se chevauchent ; et le faisceau laser de détection est émis par le canal d'émission actuel selon un retard de gigue correspondant au canal d'émission actuel, et
l'appareil de commande de LiDAR comprend en outre un module de filtrage (72), configuré pour filtrer des données d'écho reçues par un canal de réception actuel selon des données d'écho reçues par des canaux de réception adjacents pour obtenir un résultat de balayage du canal de réception actuel,
dans lequel le module de filtrage (72) comprend une deuxième unité de filtrage configurée pour :
identifier si un point cible est un point de bruit selon les données d'écho reçues par les canaux de réception adjacents, lorsque les données d'écho reçues par le canal de réception actuel comprennent le point cible ; et
lorsque le point cible est le point de bruit, supprimer les données d'écho correspondant au point cible.

8. Dispositif terminal, comprenant une mémoire, un processeur et un programme d'ordinateur stocké dans la mémoire et exécutable sur le processeur, dans lequel le programme d'ordinateur, lorsqu'il est exécuté par le processeur, amène le processeur à mettre en œuvre le procédé de commande de LiDAR selon l'une quelconque des revendications 1 à 6.
